(19) Europäisches Patentamt / European Patent Office / Office européen des brevets

(11) **EP 4 420 765 A1**

(12) **EUROPÄISCHE PATENTANMELDUNG**

(43) Veröffentlichungstag:
   **28.08.2024   Patentblatt 2024/35**

(51) Internationale Patentklassifikation (IPC):
   ***B01D 61/12*** *(2006.01)*

(21) Anmeldenummer: **24159211.2**

(22) Anmeldetag: **22.02.2024**

(52) Gemeinsame Patentklassifikation (CPC):
   (C-Sets verfügbar)
   **B01D 61/12;** B01D 2311/06; B01D 2311/20;
   B01D 2313/19; B01D 2315/12; B01D 2317/025

(Forts.)

(84) Benannte Vertragsstaaten:
   **AL AT BE BG CH CY CZ DE DK EE ES FI FR GB
   GR HR HU IE IS IT LI LT LU LV MC ME MK MT NL
   NO PL PT RO RS SE SI SK SM TR**
   Benannte Erstreckungsstaaten:
   **BA**
   Benannte Validierungsstaaten:
   **GE KH MA MD TN**

(30) Priorität: **23.02.2023   DE 102023104502**

(71) Anmelder: **B. Braun Avitum AG**
   **34212 Melsungen (DE)**

(72) Erfinder:
   • **Lieb, Nino**
     **34212 Melsungen (DE)**
   • **Odernheimer, Philipp**
     **34212 Melsungen (DE)**
   • **Giesa, Jonas**
     **34121 Kassel (DE)**
   • **Krietemeyer, Stephan**
     **79400 Kandern (DE)**

(74) Vertreter: **Tergau & Walkenhorst
   Intellectual Property GmbH
   Lurgiallee 12
   60439 Frankfurt am Main (DE)**

(54) **MEMBRANFILTERANLAGE UND VERFAHREN ZUR MEMBRANFILTERUNG EINER FLÜSSIGKEIT**

(57)   Membranfilteranlage (60), insbesondere zur Umkehrosmose, umfassend einen Vorlagetank (1), eine Ringleitung (28) zum Anschluss von Verbrauchern (29), und wenigstens eine Stufe (51, 52), welche umfasst
• ein Membranmodul (4, 17), verbunden mit einer Konzentratleitung (8, 21) zur Abgabe eines Konzentratvolumenstroms und einer Permeatleitung (13, 27) zur Abgabe eines Permeatvolumenstroms;
• eine Zulaufleitung (3, 16) zum Membranmodul (4, 17);
• wenigstens eine Druckerhöhungspumpe (2, 15) zum Pumpen von Flüssigkeit in das Membranmodul (4, 17);
• wenigstens eine Zirkulationspumpe (11, 24) zur Rückförderung von Konzentrat aus dem Membranmodul (4, 17) in die Zulaufleitung (3, 16),
wobei wenigstens zwei Sensoren (7, 14, 20, 26, 30, 33, 34, 35, 36, 39, 40) zur jeweiligen Messung einer Prozessgröße vorgesehen sind, und wobei wenigstens eine Steuer- und Regeleinheit (80, 81, 82, 83) vorgesehen ist, und wobei der jeweilige Sensor (7, 14, 20, 26, 30, 33, 34, 35, 36, 39, 40) signaleingangsseitig mit der wenigstens einen Steuer- und Regeleinheit (80, 81, 82, 83) verbunden ist, und wobei die wenigstens eine Steuer- und Regeleinheit (80, 81, 82, 83) konfiguriert ist, die Pumpen (2, 11, 15, 24) aufgrund der Sensorsignale der wenigstens zwei Sensoren (7, 14, 20, 26, 30, 33, 34, 35, 36, 39, 40) zu regeln.

FIG. 2

EP 4 420 765 A1

(52) Gemeinsame Patentklassifikation (CPC): (Forts.)

C-Sets
B01D 2311/06, B01D 2311/14, B01D 2311/16

**Beschreibung**

Die Erfindung betrifft eine Membranfilteranlage nach dem Oberbegriff von Anspruch 1. Sie betrifft weiterhin ein Verfahren zur Membranfilterung einer Flüssigkeit nach dem Oberbegriff von Anspruch 16.

Membranfilteranlagen werden nach dem Prinzip der Umkehrosmose verwendet, um bei der Dialyse Salze und andere Stoffe aus einer Flüssigkeit herauszufiltern. Während der Dialysebehandlung kommen Patienten mit einer großen Menge an Dialysierflüssigkeit in Kontakt, die zu nahezu 99,3 % aus Wasser besteht.

Die Dialysierflüssigkeit und das Blut des Patienten sind lediglich durch eine semipermeable Membran getrennt. Klinische Studien zeigen, dass Kontaminationen im Dialysewasser zu akuten und chronischen Problemen beitragen und zu schweren Komplikationen bei Hämodialysepatienten führen. Daher ist die Wasserqualität ein entscheidender Schlüsselfaktor der modernen Dialyse. Da Wasser für Patienten extrem wichtig ist, gibt es einfach keinen Ersatz für eine möglichst hohe Wasserreinheit bei der Dialyse.

Aus der US 6,797,173 B1 sind eine Vorrichtung und ein Verfahren, welche für ein Umkehrosmosesystem geeignet sind, bekannt. Dabei ist eine Prozesskammer mit einem Einlass, einem Niederdruckauslass und einem Hochdruckauslass vorgesehen. Eine Förderpumpe wird verwendet, um den Zufuhrdruck für die Prozesskammer zu erhöhen.

Nachteilig bei bekannten Membranfilteranlagen ist, dass diese ohne Berücksichtigung der aktuellen Verbrauchssituation betrieben werden.

Der Erfindung liegt daher die Aufgabe zugrunde, eine oben beschriebene Membranfilteranlage dahingehend zu verbessern, dass sie energiesparend betrieben werden kann. Weiterhin soll ein vorteilhaftes Verfahren zur Membranfilterung einer Flüssigkeit, geeignet für die Umkehrosmose, angegeben werden.

In Bezug auf die Membranfilteranlage wird diese Aufgabe erfindungsgemäß gelöst durch die Merkmale von Anspruch 1.

Vorteilhafte Ausgestaltungen der Erfindung sind Gegenstand der Unteransprüche.

Die Erfindung geht von der Überlegung aus, dass ein energiesparender Betrieb einer Membranfilteranlage vorteilhaft wäre. Da sich die Anzahl und Verbrauchsmenge der an die Anlage angeschlossenen Verbraucher im Laufe der Zeit ändert, ist ein unangepasster Betrieb der Flüssigkeitsförderung nicht ökonomisch. Ein energiesparender Betrieb müsste aber die aktuelle Verbrauchersituation an der Membranfilteranlage berücksichtigen.

Wie nunmehr erkannt wurde, kann dieses Ziel erreicht werden, indem wenigstens eine Prozessgröße verwendet wird, um wenigstens eine Pumpe der Membranfilteranlage zu regeln. Je nachdem, ob bzw. wie viele Verbraucher an der Ringleitung angeschlossen sind, ändern sich Prozessgrößen wie Druck oder auch Durchfluss. Diese Prozessgrößen können daher benutzt werden, um den aktuellen Verbrauch der Anlage zu bestimmen und die Förderung von Flüssigkeit durch die Ringleitung daran anzupassen.

Der Ausdruck, dass die Steuer- und Regeleinheit konfiguriert ist, die Pumpen aufgrund der Sensorsignale der wenigstens zwei Sensoren zu regeln, bedeutet dabei insbesondere, dass die Steuer- und Regeleinheit angepasst bzw. konzipiert bzw. programmiert bzw. eingerichtet ist, die Regelung durchzuführen. Die entsprechende Regelung ist dabei vorzugsweise hardware- und/oder softwaremäßig in der Steuer- und Regeleinheit implementiert. Die Steuer- und Regeleinheit führt dementsprechend diese Regelung aufgrund der Sensorsignale durch. Äquivalentes gilt für die Konfiguration der Steuer- und Regeleinheit in bevorzugten Ausgestaltungen der Erfindung.

Die Erfindung umfasst dabei insbesondere die Regelung aller Pumpen in der jeweiligen Stufe, also sowohl der jeweiligen Druckerhöhungspumpe und der jeweiligen Zirkulationspumpe einer Stufe.

Das Regeln einer Pumpe umfasst bevorzugt das Regeln der Drehzahl der Pumpe. Bevorzugt wird bei der Regelung die Drehzahl der Pumpe derart eingestellt, dass ein Istwert einem Sollwert angeglichen wird. Die Soll- und Istwerte betreffen bevorzugt einen Druck in einer Leitung oder einen Durchfluss durch eine Leitung.

Die Pumpen sind bevorzugt als Kreiselpumpen mit einem Frequenzumrichter ausgebildet. Der Frequenzumrichter kann dabei integriert an den Pumpen installiert sein oder über die Stromzuleitung mit den Pumpen verbunden sein.

Die Steuer- und Regeleinheit ist vorteilhafterweise derart konfiguriert, dass sie durch die Regelung der Druckerhöhungspumpe und der Zirkulationspumpe einen Permeatvolumenstrom und einen Konzentratvolumenstrom an die aktuelle Verbraucherentnahme anpasst.

Der jeweilige Sensor ist vorteilhafterweise als Drucksensor oder als Durchflusssensor ausgebildet.

In einer bevorzugten Ausführungsform ist der wenigstens eine Sensor ein Drucksensor. Ein Drucksensor ist besonders gut dafür geeignet, die Auslastung der Anlage durch angeschlossene Verbraucher zu erfassen. Die Regelung der Anlage nach einem Drucksollwert und die Anpassung der Drehzahl der entsprechenden Druckerhöhungspumpe kann besonders zu einem energetisch günstigen Betrieb der Anlage beitragen. Durch das Regeln über den Prozessdruck ist keine exakte Kenntnis über die Anzahl und den tatsächlichen Verbrauch von Abnehmern notwendig.

Der Drucksensor misst vorteilhafterweise den Druck an einem Ende der Ringleitung am Vorlagetank, welches stromabwärts hinter den Verbrauchern liegt, also gewissermaßen am Tankeinlauf. Eine Druckmessung an dieser Stelle gibt in besonders präziser Weise einen Hinweis auf die Abnahme aus dem Flüssigkeitssystem. Der Drucksensor ist dabei bevorzugt an diesem Ende der Ringleitung angeordnet. Eine Druckmessung an dieser Stelle erfasst alle angeschlossenen Verbraucher bzw. den durch die Verbraucher ausgelösten Druckverlust.

In einer bevorzugten Ausführungsform ist wenigstens ein Drucksensor vorgesehen, wobei die wenigstens eine Steuer- und Regeleinheit konfiguriert ist, bei einer Unterschreitung eines Drucksollwertes durch den gemessenen Druck durch den Drucksensor die Drehzahl der Druckerhöhungspumpe derart zu erhöhen, dass der Drucksollwert durch den Druckistwert erreicht wird, und bei einer Überschreitung des Drucksollwertes durch den gemessenen Druck die Drehzahl der Druckerhöhungspumpe derart zu verringern, dass der Drucksollwert durch den Druckistwert erreicht wird. Äquivalent sind auch die Regelungen für einen Durchflusssollwert zu verstehen.

In einer bevorzugten Ausführungsform umfasst die Membranfilteranlageeinen am Anfang der Ringleitung angeordneten Durchflusssensor zur Messung des das Membranmodul permeatseitig verlassenden Flüssigkeitsstroms und einen Durchflusssensor zur Messung des das Membranmodul konzentratseitig verlassenden Flüssigkeitsstrom, wobei die Steuer- und Regeleinheit derart konfiguriert ist, die Drehzahl der Zirkulationspumpe in Abhängigkeit von dem durch die Durchflusssensoren gemessenen Durchfluss, der Ausbildung des Membranmoduls und dem Überströmungsfaktor anzusteuern, derart, dass ein gewünschter Durchflusssollwert im Konzentrat realisiert wird.

"Überströmung" bzw. "Überströmungsfaktor" bezeichnet dabei das Verhältnis von Produkt zu Edukt bzw. gibt ein Verhältnis von zugeführtem Prozesswasser zu erzeugtem Permeat unter Berücksichtigung der Membrananzahl an.

Unter der Ausbildung des Membranmoduls wird hier insbesondere die Anzahl und/oder Größe der Membranelemente und/oder ihre Anordnung in Reihen bzw. parallel und/oder ihre Durchlässigkeit bzw. Filtereigenschaften verstanden bzw. Kombinationen davon. Insbesondere wird die Anzahl der Membranelemente berücksichtigt.

Vorteilhafterweise umfasst die Membranfilteranlage ein, insbesondere in der Ringleitung angeordnetes, Dämpfungsglied. Vorteilhafterweise ist das Dämpfungsglied im Bereich des Endes der Ringleitung am Vorlagetank angeordnet.

Durch diese Positionierung wird die Regelstrecke minimal beeinflusst, da der schnelle Druckabbau am Ende der Regelstrecke nur eine minimale zusätzliche Systemdynamik miteinbringt.

Bevorzugt umfasst das Dämpfungsglied ein Überströmventil, welches sich öffnet, sobald der am Überströmventil anliegende Druck größer als der eingestellte Haltedruck ist. Sobald der am Überströmventil anliegende Druck größer als der eingestellte Haltedruck ist, öffnet sich dieses Ventil sukzessive um den Druck in den Vorlagetank entweichen lassen zu können. Auf diese Weise können Druckspitzen abgefangen werden. Das Überströmventil ist vorzugsweise als rein mechanisches Ventil ausgebildet.

In einer bevorzugten Ausführung umfasst das Dämpfungsglied ein Überströmventil und einen Durchflussbegrenzer. In dieser Variante erfüllt das Überströmventil eine Doppelfunktion. Neben dem Abfangen von Druckspitzen fungiert es auch als Bypass, der beispielsweise für die chemische und thermische Desinfektion verwendet wird.

Durch diesen Aufbau kann gewährleistet werden, dass ein definiertes minimales Volumen zu jeder Zeit durch die Ringleitung fließt, da der Durchflussbegrenzer druckunabhängig agiert. Das Überströmventil ist während des regulären Betriebs geschlossen und nur zum Abfangen der Druckspitzen und Bypassen von höheren Volumenströmen vorhanden. Der Druck kann in dieser Konfiguration als Regelgröße verwendet werden. Dies bringt den Vorteil, dass die Verbraucher und die angeschlossene Ringleitung als Störgröße ausgeregelt werden können ohne grö-ßere Systemkenntnis darüber zu haben.

Das Dämpfungsglied umfasst vorteilhafterweise ein Membranausdehnungsgefäß oder ein Magnetventil in Verbindung mit einem Druckschalter oder Drucksensor. Bevorzugt wird dadurch erreicht, dabei das minimale definierte Volumen vorhanden, damit sich kein stehendes Wasser innerhalb des Systems bzw. der Anlage befindet.

Das Membranmodul umfasst vorteilhafterweise eine Anzahl von in Reihe oder parallel geschaltete Untermembranmodulen, wobei das jeweilige Untermembranmodul eine Anzahl von Membranen umfasst. Es filtert Stoffe aus der Flüssigkeit, welche in das Membranmodul geleitet werden und weist zwei getrennte Bereiche auf, nämlich einen Permeatbereich und einen Konzentratbereich. Das Permeat ist dabei das gereinigte Wasser. Durch das Rezirkulieren kann erreicht werden, dass der Wasserverbrauch gesenkt wird, da Wasser wiederverwendet wird.

Die wenigstens eine Steuer- und Regeleinheit kann hardware- und/oder softwaremäßig realisiert sein. Es kann für jede Pumpe und/oder jeden Regelvorgang eine eigene Steuer- und Regeleinheit vorgesehen sein. Die Kommunikation kann dabei entweder analog, über Bussysteme oder über das Manipulieren von Spannungspegeln (0 und 1) erfolgen. Die Steuer- und Regeleinheiten können zu eine Mehrzahl oder auch in einer einzigen Steuer- und Regeleinheit kombiniert sein.

In einer bevorzugten Ausführungsform der Membranfilteranlage ist ein Durchflusssensor stromaufwärts gesehen hinter dem Vorlagetank und nach dem wenigstens einen Verbraucheranschluss und/oder wenigstens ein Durchflusssensor zwischen Ringleitung und wenigstens einem Verbraucheranschluss angeordnet, welcher signaleingangsseitig mit der wenigstens einen Steuer- und Regeleinheit verbunden ist, welche die Druckerhöhungspumpe nach einem Durchflusssollwert regelt. Eine Druckmessung an dieser Stelle gibt in besonders präziser Weise einen Hinweis auf die Auslastung der Anlage. Der Drucksensor ist dabei bevorzugt an diesem Ende der Ringleitung angeordnet. Eine Druckmessung an dieser Stelle erfasst alle angeschlossenen Verbraucher bzw. den durch die Verbraucher ausgelösten Druckverlust.

Die oben beschriebene Membranfilteranlage mit einer Druckerhöhungspumpe, einem Membranmodul und einer Zirkulationspumpe ist in einer bevorzugten Ausführung einstufig aufgebaut, d.h. sie umfasst genau eine Stufe bzw. Filterstufe.

Die Erfindung umfasst auch mehrstufige Membranfilteranlagen, wobei jede der Stufen jeweils eine Druckerhöhungspumpe, eine Zirkulationspumpe und ein Membranmodul umfasst. Bei mehrstufigen Anlagen schließt sich bevorzugt jede weitere Stufe an die jeweils vorherige stromabwärts hydraulisch an, sodass eine Sequenz von Stufen gebildet wird. Dies bedeutet insbesondere, dass der Permeatstrom aus der jeweils vorherigen Stufe in die sich hydraulisch daran anschließende Stufe gefördert wird.

In einer ersten bevorzugten Ausführungsform umfasst die Membranfilteranlage zwei Stufen, die erste Stufe umfassend ein erstes Membranfiltermodul, eine erste Druckerhöhungspumpe und eine erste Zirkulationspumpe, die zweite Stufe, welche stromabwärts des ersten Membranmoduls angeordnet ist, umfassend ein zweites Membranmodul, eine zweite Druckerhöhungspumpe stromabwärts des ersten Membranmoduls und eine zweite Zirkulationspumpe, wobei ein erster Drucksensor saugseitig der zweiten Druckerhöhungspumpe angeordnet ist, und wobei die wenigstens eine Steuer- und Regeleinheit konfiguriert ist, eine Drucksollwertregelung der ersten Druckerhöhungspumpe aufgrund des von dem ersten Drucksensor gemessenen Druckwertes durchzuführen, und wobei ein zweiter Drucksensor stromabwärts des zweiten Membranmoduls angeordnet ist, und wobei die wenigstens eine Steuer- und Regeleinheit konfiguriert ist, eine Drucksollwertregelung der zweiten Druckerhöhungspumpe aufgrund des von dem zweiten Drucksensor gemessenen Druckwertes durchzuführen.

Statt der Drucksensoren können auch Durchflusssensoren verwendet werden. Die Regelung der entsprechenden Zirkulationspumpe erfolgt hierbei bevorzugt so wie oben im Rahmen der einstufigen Membranfilteranlage beschrieben.

In einer weiteren bevorzugten Ausführungsform umfasst die Membranfilteranlage zwei Stufen, die erste Stufe umfassend ein erstes Membranfiltermodul, eine erste Druckerhöhungspumpe und eine erste Zirkulationspumpe, die zweite Stufe, welche stromabwärts des ersten Membranmoduls angeordnet ist, umfassend ein zweites Membranmodul, eine zweite Druckerhöhungspumpe stromabwärts des ersten Membranmoduls und eine zweite Zirkulationspumpe, wobei ein erster Drucksensor am Ende in der Ringleitung stromaufwärts des Vorlagetanks angeordnet ist, und wobei die wenigstens eine Steuer- und Regeleinheit konfiguriert ist, eine Drucksollwertregelung der ersten Druckerhöhungspumpe aufgrund des von dem ersten Drucksensor gemessenen Druckwertes durchzuführen, und wobei ein zweiter Drucksensor permeatseitig stromabwärts des ersten Membranmoduls angeordnet ist, und wobei die wenigstens eine Steuer- und Regeleinheit konfiguriert ist, eine Drucksollwertregelung der zweiten Druckerhöhungspumpe aufgrund des von dem zweiten Drucksensor gemessenen Druckwertes durchzuführen.

Statt der Drucksensoren können auch Durchflusssensoren verwendet werden. Die Regelung der entsprechenden Zirkulationspumpe erfolgt hierbei bevorzugt so wie oben im Rahmen der einstufigen Membranfilteranlage beschrieben.

Vorteilhafterweise umfasst das Membranmodul der jeweiligen Stufe eine Anzahl von in Reihe oder parallel geschaltete Untermembranmodulen, wobei das jeweilige Untermembranmodul eine Anzahl von Membranen umfasst.

In Bezug auf das Verfahren wird die oben genannte Aufgabe erfindungsgemäß gelöst durch die Merkmale von Anspruch 16.

Die wenigstens eine Prozessgröße ist bevorzugt der Druck und/oder der Flüssigkeitsdurchfluss an einer Stelle der Ringleitung.

Die Erfindung betrifft auch eine Membranfilteranlage, insbesondere zur Umkehrosmose, umfassend einen Vorlagetank, eine Ringleitung zum Anschluss von Verbrauchern, und wenigstens eine Stufe bzw. Filterstufe, welche umfasst

- ein Membranmodul, verbunden mit einer Konzentratleitung zur Abgabe eines Konzentratvolumenstroms und einer Permeatleitung zur Abgabe eines Permeatvolumenstroms;
- eine Zulaufleitung zum Membranmodul;
- wenigstens eine Druckerhöhungspumpe zum Pumpen von Flüssigkeit in das Membranmodul;
- wenigstens eine Zirkulationspumpe zur Rückförderung von Konzentrat aus dem Membranmodul in die Zulaufleitung,

wobei wenigstens zwei Sensoren zur jeweiligen Messung einer Prozessgröße vorgesehen sind, und wobei wenigstens eine Steuer- und Regeleinheit vorgesehen ist, und wobei der jeweilige Sensor signaleingangsseitig mit der wenigstens einen Steuer- und Regeleinheit verbunden ist, und wobei die wenigstens eine Steuer- und Regeleinheit konfiguriert ist, die Pumpen aufgrund der Sensorsignale der beiden Sensoren zu regeln, und wobei die Membranfilteranlage ein, insbesondere in der Ringleitung angeordnetes, Dämpfungsglied aufweist.

Vorteilhafterweise ist das Dämpfungsglied, insbesondere unmittelbar, stromaufwärts des Vorlagetanks angeordnet. Durch diese Positionierung wird die Regelstrecke minimal beeinflusst, da der schnelle Druckabbau am Ende der Regelstrecke nur eine minimale zusätzliche Systemdynamik miteinbringt.

Bevorzugt umfasst das Dämpfungsglied ein Überströmventil, welches sich öffnet, sobald der am Überströmventil anliegende Druck größer als der eingestellte Haltedruck ist. Sobald der am Überströmventil anliegende Druck größer als der eingestellte Haltedruck ist, öffnet sich dieses Ventil sukzessive um den Druck in den Vorlagetank entweichen lassen zu können. Auf diese Weise können Druckspitzen abgefangen werden. Das Überströmventil ist vorzugsweise als rein mechanisches Ventil ausgebildet.

In einer bevorzugten Ausführung umfasst das Dämpfungsglied ein Überströmventil und einen Durchflussbegrenzer. In dieser Variante erfüllt das Überströmventil eine Doppelfunktion. Neben dem Abfangen von Druckspitzen fungiert es auch als Bypass, der beispielsweise für die chemische und thermische Desinfektion verwendet wird. Durch diesen Aufbau kann gewährleistet werden, dass ein definiertes minimales Volumen zu jeder Zeit durch die Ringleitung fließt, da der Durchflussbegrenzer druckunabhängig agiert. Das Überströmventil ist während des regulären Betriebs geschlossen und nur zum Abfangen der Druckspitzen und Bypassen von höheren Volumenströmen vorhanden. Der Druck kann in dieser Konfiguration als Regelgröße verwendet werden. Dies bringt den Vorteil, dass die Verbraucher und die angeschlossene Ringleitung als Störgröße ausgeregelt werden können ohne größere Systemkenntnis darüber zu haben.

Das Dämpfungsglied umfasst vorteilhafterweise ein Membranausdehnungsgefäß oder ein Magnetventil und einen Druckschalter oder Drucksensor. Vorteilhafterweise umfasst das Dämpfungsglied ein Magnetventil und einen Druckschalter.

Die Vorteile der Erfindung liegen insbesondere darin, dass durch die Sensoren zur Messung von Prozessgrößen die Membranfilteranlage bedarfsgerecht und damit energiesparend betrieben werden kann, da die Drehzahl während einer geringeren Abnahmeperiode verringert werden kann. Dadurch, dass bei geringem Verbrauch die beteiligten Pumpen mit geringerer Drehzahl betrieben werden können, kann die Geräuschentwicklung der Anlage reduziert werden und unnötige Wärmeentwicklung vermieden werden.

Ein Ausführungsbeispiel der Erfindung wird anhand einer Zeichnung näher erläutert. Darin zeigen in stark schematisierter Darstellung:

FIG. 1  Komponenten einer Membranfilteranlage nach dem Stand der Technik;

FIG. 2  eine Membranfilteranlage in einer ersten bevorzugten Ausführungsform;

FIG. 3  eine zweistufige Membranfilteranlage in einer bevorzugten Ausführungsform;

FIG. 4  eine einstufige Membranfilteranlage in einer bevorzugten Ausführungsform, und

FIG. 5  eine zweistufige Membranfilteranlage in einer weiteren bevorzugten Ausführungsform.

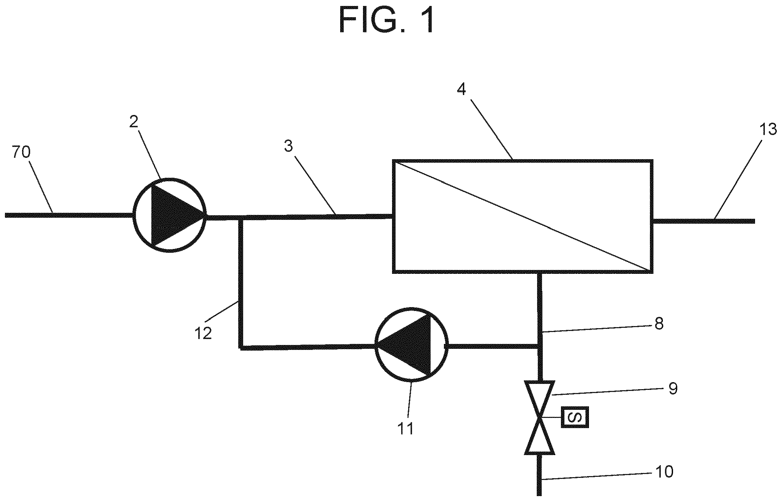

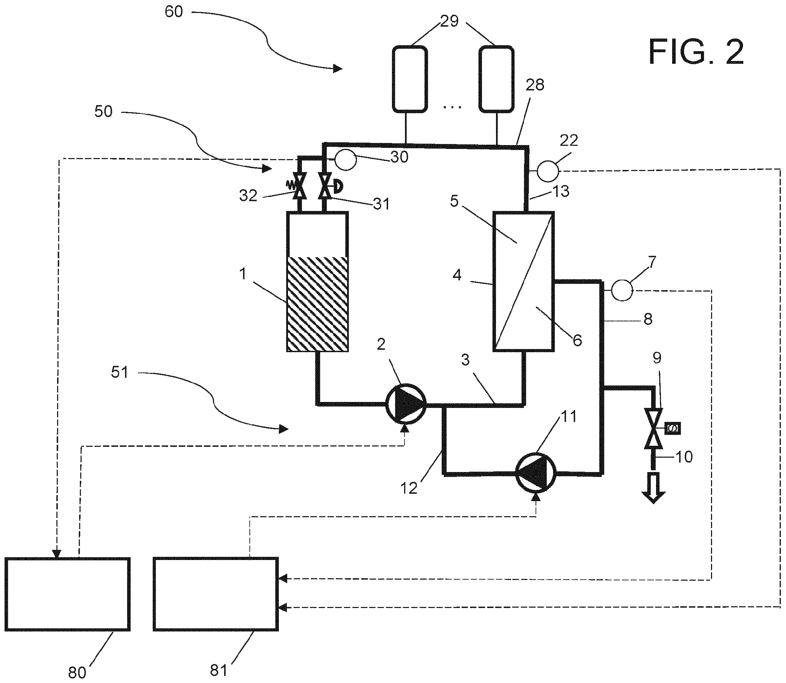

In FIG. 1 sind schematisch Komponenten einer Membranfilteranlage 60 aus dem Stand der Technik dargestellt. Eine derartige Membranfilteranlage ist beispielsweise in der US 6,797,173 B1 in FIG. 2 dargestellt.

Der allgemeine hydraulische Aufbau einer in FIG. 1 dargestellten Membranfilteranlage 60 ist seit mehreren Jahrzehnten bekannt. Ein Zulaufstrom 70 wird über eine Druckerhöhungspumpe 2 in ein Membranmodul 4 gepresst. Das Membranmodul 4 kann dabei eine oder mehrere Membranen, die jeweils in Gruppen in Reihe oder parallelgeschaltet sind, enthalten. Des Weiteren können mehrere Membranmodule 4 in Reihe zueinander geschaltet werden.

Durch den Prozess entstehen ausgehend von dem Membranmodul 4 in einer Permeatleitung 13 ein filtrierter Permeatstrom und in einer Konzentratleitung 8 ein Konzentratstrom, welcher die zurückgehaltenen Stoffe abtransportiert. Eine Zirkulationspumpe 11 fördert einen Teil des Konzentrats, d.h. das rezirkulierte Konzentrat 12, im Konzentratstroms zurück zur Druckerhöhungspumpe 2, wo es sich mit dem Zulaufstrom 70 vermischt und als Feedwasser den Prozess wiederholt. Der nicht rezirkulierte Anteil des Konzentrats wird über ein Ventil 9 (z.B. ein Magnetventil, Nadelventil, elektrisches Stellventil, o.Ä.) als Abwasser aus dem System geleitet. Durch dieses System wird immer eine annähernd gleiches Permeatvolumen produziert, welches allerdings unabhängig der tatsächlichen Auslastung erfolgt. Das bedeutet, dass der Energieverbrauch auf einem konstanten Niveau verweilt.

Eine bekannte Abwandlung des bekannten Systems besteht in der Verwendung einer drehzahlvariablen Pumpe als Druckerhöhungspumpe 2 oder einer drehzahlvariablen Pumpe als Zirkulationspumpe 11. Dies ermöglicht eine adaptive Einstellung des Produktionsdruckes oder der Überströmung, allerdings nicht beides innerhalb eines Systems. Dadurch ist die potenziell mögliche Energieeinsparung deutlich eingeschränkt, da sowohl Permeatvolumenstrom als auch Konzentratvolumenstrom implizit durch die Überströmung voneinander abhängig sind.

Eine verbesserte und erfindungsgemäße Membranfilteranlage 60 in einer bevorzugten Ausführungsform ist in FIG. 2 dargestellt. Die Membranfilteranlage 60 umfasst einen Vorlagetank 1. Am Tankeinlauf des Vorlagetanks ist ein Drucksensor 30 angeordnet. Die Membranfilteranlage 60 umfasst genau eine Stufe bzw. Filterstufe 51 mit einem Membranmodul 4, in welchem Permeat 5 von Feedwasser getrennt wird, wobei das Konzentrat 6 das Nebenprodukt dieses Trennungsprozesses ist.

Das Wasser aus dem Vorlagetank 1 wird durch eine Zulaufleitung 3 mittels einer Druckerhöhungspumpe 2 zusammen mit dem rezirkuliertem Konzentrat 12 in das Membranmodul 4 eingespeist. Das Permeat 5 wird in die Ringleitung 28, das Konzentrat 6 wird in die Konzentratleitung 8 eingebracht. Die Membranfilteranlage 60 umfasst weiterhin eine Zirkulationspumpe 11. Sie umfasst des Weiteren einen Durchflusssensor 22 zur Messung des Permeatvolumenstroms und einen Durchflusssensor 7 zur Messung des Konzentratvolumenstroms. Die Membranfilteranlage 60 umfasst eine erste Steuer- und Regeleinheit 80 und eine zweite Steuer- und Regeleinheit 81.

Die Membranfilteranlage 60 umfasst einen selbstregelnden Durchflussbegrenzer 31 und ein hydraulisch parallel geschaltetes Überströmventil 32, welche zusammen eine Dämpfungsglied 50 bilden. Der selbstregelnde Durchflussbegrenzer 31 lässt ein definiertes Volumen Flüssigkeit (unabhängig vom Druck) wieder zurück in den Vorlagetank 1 fließen. Bei einem definierten Schwellenwert öffnet sich das Überströmventil 32 und lässt Wasser zurück in den Vorlagetank 1. Das Überströmventil 32 ist bevorzugt als rein mechanisches Bauteil ausgebildet. Dabei wird eine Feder benutzt, um den Öffnungsdruck einzustellen. Beim Überschreiten des Druckschwellenwertes wird die Federkraft überwunden, und das Überströmventil öffnet sich. Je höher der Druck wird, umso mehr gibt die Feder nach, und umso mehr Flüssigkeit kann durch das Überströmventil strömen. Bei Unterschreiten des Druckschwellenwertes schließt entsprechend das Überströmventil.

Eine Ringleitung 28 verbindet hydraulisch die Permeatleitung 13 (inklusive Durchflusssensor 22) mit dem Dämpfungsglied 50 und Drucksensor 30. An die Ringleitung 28 sind ein oder mehrere Verbraucher 29 anschließbar bzw. angeschlossen.

Die Druckpumpe bzw. Druckerhöhungspumpe 2 bzw. die Steuer- und Regeleinheit 80 verwendet als Prozessgröße den Druck am Ende der Ringleitung 28, welcher von dem Drucksensor 30 gemessen wird, welcher signaleingangsseitig mit der Steuer- und Regeleinheit 80 verbunden ist. Sobald wenigstens ein Verbraucher 29 Permeat aus dem System entnimmt, sorgt dies für einen Druckabfall. Die Druckerhöhungspumpe 2 reagiert auf diese negative Abweichung des Sollwerts, indem durch die Steuer- und Regeleinheit 80 ihre Pumpendrehzahl und damit korrespondierend der Permeatvolumenstrom erhöht wird. Beim Wegfallen eines Verbrauchers 29 würde das überproduzierte Permeat zu einem ansteigenden Druck führen, da der Durchflussbegrenzer 31 nur den definierten Volumenstrom passieren lässt. Die positive Abweichung zum Sollwert führt zu einer Reduzierung der Drehzahl an der Druckerhöhungspumpe 2.

Der Durchflusssensor 7 und der Durchflusssensor 22 sind eingangsseitig mit der zweiten Steuer- und Regeleinheit 81 verbunden, welche die Zirkulationspumpe 11 regelt. Die Drehzahlregelung der Zirkulationspumpe 11 ist implizit an die Regelung der Druckerhöhungspumpe 2 und damit an das Permeatvolumen der Verbraucher 29 geknüpft. Der steigende oder sinkende Permeatstrom wird von dem Durchflusssensor 22 erfasst. Als Folge dessen wird die Überströmung entsprechend angepasst, indem der Konzentratvolumenstrom über die Drehzahl der Zirkulationspumpe 11 erhöht oder verringert wird. Als Prozessvariablen werden somit der Durchflusssensor 22 und der Durchflusssensor 7 bzw. deren Signale verwendet.

Abwasser 10, welches über ein Ventil 9, insbesondere ein Magnetventil, aus der Anlage herausgeleitet wird, geht ebenfalls in die Berechnung mit ein, da das Volumen ebenfalls über den Durchflusssensor 7 fließt und somit zur Überströmung beiträgt. Dadurch kann bei geöffnetem oder teilgeöffnetem Ventil 9 die Drehzahl der Zirkulationspumpe 11 gesenkt werden.

In bevorzugter Ausführung ist das Ventil 9 als Magnetventil ausgebildet. In vorteilhafterweise Ausführung ist das Ventil 9 als elektrisches oder mechanisches Stellventil ausgebildet

Die beiden Steuer- und Regeleinheiten 80, 81 können auch als eine einzige bzw. integrierte Steuer- und Regeleinheit ausgebildet sein, welche dann die Regelfunktionen für beiden Pumpen 2, 11 übernimmt. Die Regelung ist software- und/oder hardwaremäßig in der Steuer- und Regeleinheit 80, 81 integriert Bevorzugt wird die Drehzahl über einen Frequenzumrichter geregelt und der Stellwert von einem Prozessor berechnet. Der Stellwert kann dabei entweder dezentral von den einzelnen Frequenzumrichter oder zentral von einer Auswerteeinheit berechnet werden. Eine Kombination aus zentral berechnetem Stellwert 1 und dezentral berechnetem Stellwert 2 bis Stellwert n ist ebenfalls möglich.

Bei der dargestellten Membranfilteranlage 60 können zwei Regelziele vorgegeben werden. Als ein erstes Regelziel kann ein fester Druck am Ende der Ringleitung 28 gefordert werden, sodass immer genügend Wasser vorhanden ist. Der Druck wird dabei durch den Drucksensor 30 gemessen. Als ein zweites Regelziel wird gefordert, dass stets eine Überströmung auftritt, um ein Verblocken der Membran zu verhindern, was in Abhängigkeit von der Anzahl der im Membranmodul 4 eingebauten Membranen erfolgen muss.

Es gilt $V_{Konzentrat} = (V_{Permeat}/ (\text{Anzahl der Membranen})) * \text{Überströmung}$. Der Buchstabe "V" bezeichnet hier jeweils das Volumen. Das Konzentrat wird dabei von dem Durchflusssensor 7, das Permeat von dem Durchflusssensor 22 gemessen. Das Konzentratvolumen ergibt sich somit aus dem Produkt aus dem Quotienten von Permeatvolumen und Anzahl der Membranen und der Überströmung bzw. dem Überströmfaktor.

Die Überströmung ist somit hierbei definiert als

$\text{Überströmung} = (V_{Konzentrat} / V_{Permeat}) * \Sigma \text{Membranen}$. Der griechische Buchstabe "Σ" ist hierbei das mathematische Summenzeichen. Die Überströmung ergibt sich somit aus dem Quotienten aus Konzentratvolumen und Permeatvolumen, multipliziert mit der Anzahl der Membranen.

Die Regelung für die beiden Regelziele erfolgt unabhängig voneinander, ist aber system-/verfahrenstechnisch korreliert. Wie oben beschrieben, sorgt das Verbrauchen von Permeat aus der Ringleitung zu einer Erhöhung der Drehzahl der Druckerhöhungspumpe 2, was in einem höheren Permeatvolumenstrom resultiert. Durch den erhöhten Permeatvolumenstrom wird der Divisor der obigen Gleichung größer, was zu einer Verringerung der Überströmung führt. Um dies zu kompensieren, wird der Konzentratvolumenstrom über eine Drehzahlanpassung der Zirkulationspumpe 11 entsprechend angepasst.

Mögliche Regelgrößen sind dabei als Messgröße der Volumenstrom der ersten Stufe 51 bzw. das Permeat der ersten Stufe, wobei die Messungen durch die Sensoren erfolgen und/oder Druck, Volumenstrom gemessen werden oder das Konzentrat der ersten Stufe, wobei durch die Sensoren 22 und 7 Volumenströme gemessen werden. Der Permeatdruck wird für die Regelung von Druckpumpe 2 und Permeatvolumenstrom und Konzentratvolumenstrom werden für die Regelung von Zirkulationspumpe 11 gemessen. Über die Motordrehzahlen der jeweiligen Pumpe 2, 11 kann theoretisch auch bei ausreichender Systemkenntnis der Volumenstrom berechnet bzw. approximiert werden.

Der Feedstrom durch den Zulauf zum Membranmodul 4 kann ebenfalls genutzt werden, um die Überströmung zu regeln. Dabei kann entweder der Durchflusssensor 22 oder 7 in die Zulaufleitung 3 gesetzt werden. Da das System geschlossen ist, kann das Konzentratvolumen aus dem Zulaufstrom abzüglich des Permeatvolumens berechnet werden. Äquivalent kann das Permeatvolumen als Differenzwert von Zulaufstrom und Konzentratvolumen berechnet werden.

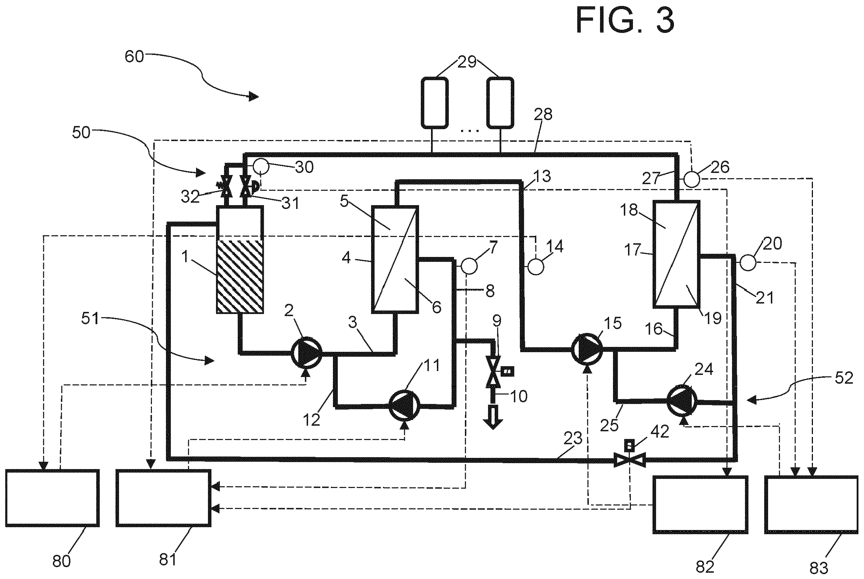

In FIG. 3 ist eine zweistufige Membranfilteranlage 60 in einer bevorzugten Ausführungsform dargestellt, in welcher das Permeat 18 der zweiten Stufe als Zulaufstrom für eine dritte Stufe verwendet wird oder in die Ringleitung 28 gespeist wird, was dann weiter entsprechend fortgeführt werden kann. Diese Konfiguration kann beliebig um weitere Stufen erweitert werden.

Die Membranfilteranlage 60 gemäß FIG. 3 weist eine erste Stufe 51 und eine sich hydraulisch daran anschließende Stufe 52 auf. Vergleichbar mit einer einstufigen Anlage wird Wasser aus dem Vorlagetank 1 über die Druckerhöhungspumpe 2 angesaugt und mit rezirkuliertem Konzentrat 12 als Feedstrom der ersten Stufe 51 über die Zulaufleitung 3 in das Membranmodul 4 gebracht. Das entstandene Konzentrat 6 wird zum Teil mit Hilfe der Zirkulationspumpe 11 der ersten Stufe 51 wiederverwendet. Der nicht rezirkulierte Teil des Konzentrats wird über das Ventil 9 als Abwasser 10 aus der Anlage geführt. Die erste Steuer- und Regeleinheit 80 regelt hierbei die Druckerhöhungspumpe 2 der ersten Stufe 51, während die zweite Steuer- und Regeleinheit 81 die Zirkulationspumpe 11 der ersten Stufe 51 regelt.

Das Permeat 5 der ersten Stufe 51 wird vor die Druckerhöhungspumpe 15 der zweiten Stufe 52 gefördert. Diese fördert das Permeat 5 der ersten Stufe 51 zusammen mit dem rezirkuliertem Konzentrat der zweiten Stufe 25 als Feedstrom durch eine Zulaufleitung 16 in das Membranmodul 17 der zweiten Stufe 52. Das entstandene Konzentrat 19 wird zum Teil mit Hilfe der Zirkulationspumpe 24 der zweiten Stufe 52 wiederverwendet. Der nicht rezirkulierte Teil des Konzentrats 19 wird über das Ventil 42 als Verwurf 23 in den Vorlagetank 1 geleitet. Das Permeat 18 der zweiten Stufe 52 wird in die Ringleitung 28 eingebracht.

Eine dritte Steuer- und Regeleinheit 82 ist signaleingangsseitig mit dem Drucksensor 30 verbunden und regelt die Drehzahl der Druckerhöhungspumpe 15 der zweiten Stufe 52. Eine vierte Steuer- und Regeleinheit 83 ist signaleingangsseitig mit den Durchflusssensoren 20, 26 der zweiten Stufe 52 verbunden und regelt die Zirkulationspumpe 24 der zweiten Stufe 52.

Ein selbstregelnder Durchflussbegrenzer 31 lässt ein definiertes Volumen (unabhängig vom Druck) wieder zurück in den Vorlagetank 1 fließen. Bei einem definierten Schwellwert öffnet sich das Überströmventil 32 und lässt Wasser zurück in den Vorlagetank 1. Ein zugeschalteter Verbraucher 29, welcher Permeat aus der Ringleitung 28 abnimmt, sorgt für einen Druckabfall in der Ringleitung 28. Dieser Druckabfall wird von einem Drucksensor 30 erfasst und die Steuer- und Regeleinheit 82 erzeugt entsprechend eine Drehzahlerhöhung an der Druckerhöhungspumpe 15 der zweiten Stufe 52. Durch diese Drehzahlerhöhung wird ebenfalls der Permeatdruck der ersten Stufe verringert, da das Permeatvolumen der zweiten Stufe 52 durch die erste Stufe 51 bedient werden muss.

Der sinkende Vordruck der zweiten Stufe 52 wird über einen Drucksensor 14 registriert und führt ebenfalls zu einer Drehzahlanpassung der Druckerhöhungspumpe 2 der ersten Stufe 51. Die Zirkulationspumpe 24 der zweiten Stufe 52 passt die Überströmung entsprechend dem gemessenen Permeatvolumen der zweiten Stufe 52 (durch den Durchflusssensor 26) und dem gemessenen Konzentratvolumen der zweiten Stufe 52 (durch den Durchflusssensor 20) an.

Der Permeatvolumenstrom der ersten Stufe 51 wird hierbei über den gemessenen Permeatvolumenstrom der zweiten Stufe 52 und einem konstanten Faktor durch die Steuer- und Regeleinheit 81 errechnet. Der Faktor wird hinzugerechnet, sobald das Ventil 42 geöffnet ist. Der Faktor ergibt sich durch den empirisch bekannten Wert des Volumenstroms durch das Ventil 42. Diese Variante wurde gewählt, um einen Sensor einzusparen, dennoch kann der Wert ebenfalls über einen Sensor erfasst werden. Dies gilt sowohl für den Verwurf 23 der 2. Stufe 52 als auch für den Permeatfluss des Permeats 5 der ersten Stufe 51. Die einzelnen Regler sind voneinander unabhängig, aber impliziert durch das System miteinander vernetzt und abhängig.

Die Membranfilteranlage 60 kann Energieeinsparung hervorrufen, indem die Drehzahl während einer geringeren Abnahmeperiode verringert werden kann. Daneben ergeben sich ebenfalls sekundäre Effekte wie Reduktion des Gesamtwasserverbrauchs und ein geringeres Lärmniveau. Da die Überströmung der jeweiligen Membran in den Membranmodulen 4, 17 zu jeder Zeit optimal innerhalb der Herstellerspezifikation ist, wird eine längere Lebensdauer der Membran ermöglicht.

In den beiden FIG. 2 und 3 ist am Ende der Ringleitung 28 vor dem Vorlagetank 1 ein Überströmventil 32 eingebaut, um Druckstöße innerhalb der Ringleitung 28 abzufangen. Dieses Überströmventil 32 kann in anderen bevorzugten Ausführungen an einer anderen, beliebigen Position innerhalb der Ringleitung 28 verbaut sein, um einen Überdruck zu vermeiden.

Innerhalb der beiden in FIG. 2 und 3 dargestellten Anordnungen erfüllt das Überströmventil 32 die sekundäre Aufgabe eines Bypasses, welcher verwendet werden kann, um erhöhtes Volumen durch die Ringleitung 28 zu befördern. Dies ist beispielsweise für die chemische und thermische Desinfektion notwendig.

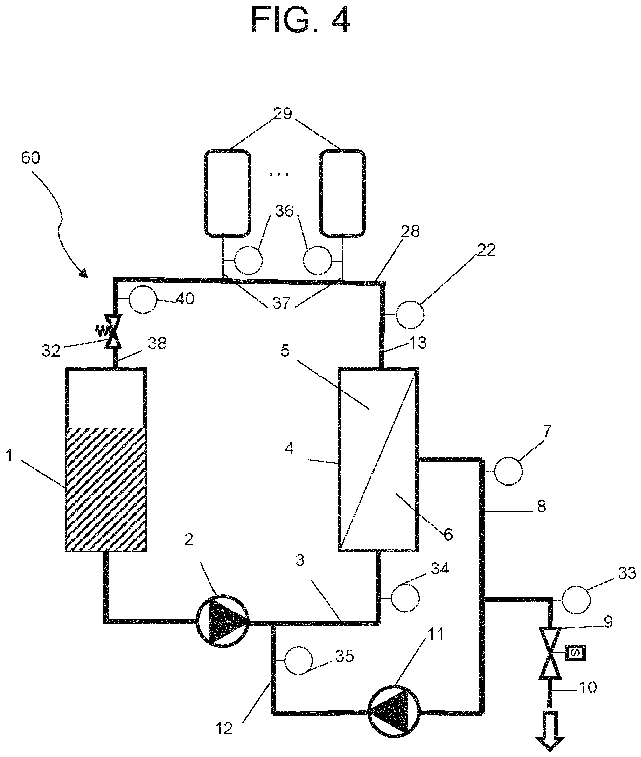

In FIG. 4 ist eine weitere bevorzugte Ausführungsform einer Membranfilteranlage 60 dargestellt, welche ein alternatives Regelkonzept über den Volumenstrom realisiert. Der Betriebsablauf und die Komponenten sind im Wesentlichen identisch zu den bisher im Rahmen von FIG. 2 und 3 beschriebenen mit dem Unterschied, dass am Ende der Ringleitung 28 vor dem Vorlagetank 1 kein Durchflussbegrenzer angeordnet ist.

Am Ende der Ringleitung 28 am Tankeinlauf des Vorlagetanks 1 ist ein Überströmventil 32 angeordnet, welches einen definierten Druck innerhalb der Ringleitung 28 hält und den Volumenstrom variiert. Die Prozessvariable für die Druckerhöhungspumpe 2 ist in diesem Fall der Volumenstrom am Ringleitungsende, der von einem Durchflusssensor 40 gemessen wird. Alternativ dazu kann auch über Durchflusssensoren 36 an Abnahmestellen, d.h. zwischen dem, jeweiligen Verbraucher 29 und der Ringleitung 28 detektiert werden, wie viel Wasser von den Verbrauchern 29 abgenommen wird. Auf diese Weise kann eine Sollwertanpassung der Druckerhöhungspumpe 2 für den Permeatvolumenstrom am Durchflusssensor 22 des Ringleitungseingangs erzeugt werden. Der Sollwert repräsentiert dann die summierten Verbräuche 37 und ein vorgegebenes Offsetvolumen 38. Die wenigstens eine Steuer- und Regeleinheit ist in dieser Figur nicht dargestellt.

Eine äquivalente Regelung ist auch bei mehrstufigen Anlagen möglich. Die Steuer- und Regeleinheiten bekommen in diesem Fall als Eingangsgröße einen Volumenstrom und müssen den benötigten Zulaufstrom der dahinterliegenden Stufe liefern. Dabei kann der Sollwert entweder errechnet oder gemessen werden.

Für die Zirkulationspumpe 11 kann das gleiche Regelprinzip wie bei den vorrangegangenen beschriebenen Membranfilteranlagen 60 angewendet werden, allerdings kann der Prozesswert auch auf andere Weisen gebildet werden. Systematisch gesehen sind der Volumenstrom von Feed bzw. Ringleitung 28, Permeat 5 und Konzentrat 6 miteinander verbunden und lassen sich durcheinander substituieren. Dadurch ist eine vielfältige Sensoranordnung möglich.

Die folgenden drei Formeln zeigen das generelle Verhältnis der Volumenströme in der Membranfilteranlage 60 auf. Es ist möglich, über andere Prozesswerte zu einem identischen Ergebnis wie in einstufige Anlagen (FIG. 2) zu kommen. Es ist ebenfalls möglich, über empirische Werte (vergleiche mit der mehrstufige Anlage gemäß FIG. 3) Sensoren zu ersetzen und auch zu einem identischen Ergebnis zu kommen.

$$V_{Feed} = V_{Konzentrat} + V_{Permeat}$$

$$V_{Konzentrat} = V_{Rezirkuliertes\ Konzentrat} + V_{Abwasser}$$

$$V_{Permeat} = V_{Verbrauch} + V_{Überströmvolumen}$$

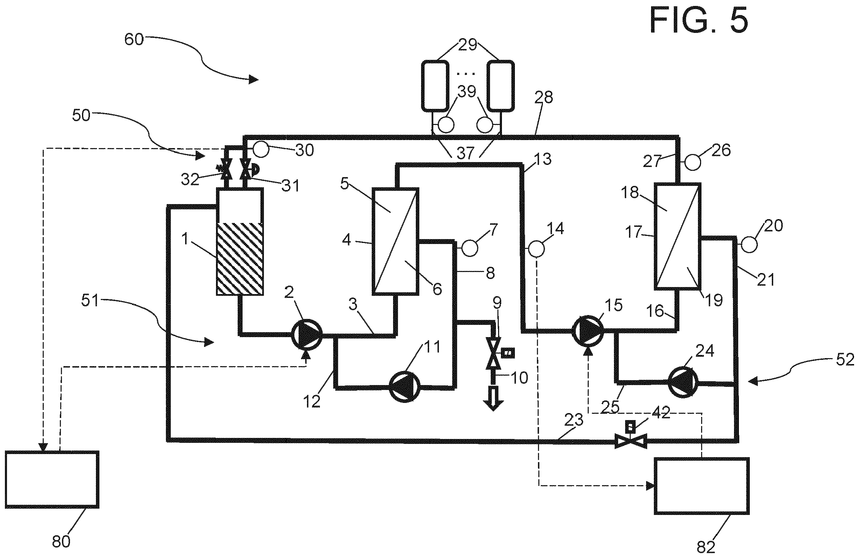

In FIG. 5 ist eine mehrstufige Membranfilteranlage 60 in einer bevorzugten Ausführungsform dargestellt mit einer weiteren bevorzugten Variante einer Regelung. Bei dieser Regelung handelt es sich um eine abgewandelte Version der präferierten Variante für mehrstufige Anlagen. Die Zirkulationspumpen 11, 24 sind ebenfalls geregelt, allerdings nach einer der bereits beschriebenen Varianten und deshalb nicht noch einmal explizit ausgeführt.

Die Druckerhöhungspumpe 2 der ersten Stufe 51 verwendet den Drucksensor 30 am Ende der Ringleitung 28 als Prozessvariable. Die Druckerhöhungspumpe 15 der zweiten Stufe 52 nutzt ein inverses Regelprinzip und verwendet den Drucksensor 14 im Permeat der ersten Stufe 51. Bei einer Permeatabnahme durch einen Verbraucher 29 reagiert die Druckerhöhungspumpe 2 der ersten Stufe 51 mit einer Drehzahlerhöhung. Diese resultiert in einem steigenden Permeatdruck in der ersten Stufe 51. Der Drucksensor 14 im Permeat der ersten Stufe erzeugt aufgrund des inversen Regelprinzips eine Drehzahlerhöhung der Druckerhöhungspumpe 15 der zweiten Stufe 52. Dies führt zu einer Erhöhung des Permeatdrucks der zweiten Stufe 52. Diese Erhöhung führt zu einer Verringerung der Sollwertabweichung der Druckerhöhungspumpe 2 der ersten Stufe 51.

Das System bzw. die Membranfilteranlage 60 ist ebenfalls skalierbar und nicht nur wie hier im Beispiel dargestellt auf zwei Stufen 51, 52 limitiert. In der FIG. 5 ist zusätzlich die Möglichkeit dargestellt, einen alternativen Drucksensor 39 als Prozessvariable zu verwenden. Die Drucksensoren 39 sind an den Abnahmestellen angeordnet. Der Drucksensor, welcher am weitesten vom Einspeisepunkt der Ringleitung 28 entfernt ist (in der Abbildung der linke Verbraucher) wird als Prozessvariable verwendet.

Es können Sensoren von angeschlossenen Verbrauchern 29 verwendet werden, um das hier oder das aus FIG. 2 und FIG. 3 beschrieben Konzept umzusetzen. Dabei wird der niedrigste Druckwert (bei stationärem Zustand) als Prozessvariable verwendet, da dieses Gerät am weitesten von der Anlage entfernt ist. Falls notwendig muss der Sollwert angepasst werden, um Druckverluste auszugleichen und einen dauerhaften Volumenstrom über den Durchflussbegrenzer 31 gewährleisten zu können.

Es ist in einer bevorzugten Ausführung auch möglich, dass bei der in FIG. 5 dargestellten Membranfilteranlage 60 ein Durchflusssollwert am Ende der Ringleitung 28 mit Hilfe eines Durchflusssensors 40 (siehe FIG. 4) gemessen wird, wobei alle Verbraucher 29 ihr abgenommenes Volumen (gemessen über die Durchflusssensoren 36) an die Membranfilteranlage 60 signalisieren. Die Summe aus allen Volumenströmen muss dann über einen Durchflusssensor 26 fließen. In diesem Fall wird, wie in FIG. 4 dargestellt, nur ein Überströmventil 32 und kein Durchflussbegrenzer 31 verwendet.

Alternativ zu einem dargestellten Überströmventil 32 in den Darstellungen von FIG. 2, 3 und 5, kann auch ein Druckausdehnungsgefäß oder ein elastisches Ringleitungsmaterial verwendet werden, um Druckstöße zu minimieren. Ebenfalls kann ein Dämpfungsglied, z.B. ein Überströmventil 32 als Verbraucher 29 angeschlossen werden, um denselben Effekt zu erfüllen, aber ohne direkt als Systemkomponente identifiziert zu werden.

Die im Zusammenhang mit den Membranfilteranlagen 60 gemäß FIG. 1-5 beschriebenen Regelvorgänge sind bevorzugte Verfahrensschritte von Verfahren zum Betreiben der jeweiligen Anlage.

Bezugszeichenliste

| 1  | Vorlagetank |
|----|-------------|
| 2  | Druckerhöhungspumpe |
| 3  | Zulaufleitung |
| 4  | Membranmodul |
| 5  | Permeat |
| 6  | Konzentrat |
| 7  | Durchflusssensor |
| 8  | Konzentratleitung |
| 9  | Ventil |
| 10 | Abwasser |
| 11 | Zirkulationspumpe |
| 12 | rezirkuliertes Konzentrat |
| 13 | Permeatleitung |
| 14 | Drucksensor |
| 15 | Druckerhöhungspumpe |
| 16 | Zulaufleitung |
| 17 | Membranmodul |
| 18 | Permeat |
| 19 | Konzentrat |
| 20 | Durchflusssensor |
| 21 | Konzentratleitung |
| 22 | Durchflusssensor |
| 23 | Verwurf 2. Stufe |
| 24 | Zirkulationspumpe |
| 25 | rezirkuliertes Konzentrat |
| 26 | Durchflusssensor |
| 27 | Permeatleitung |
| 28 | Ringleitung |
| 29 | Verbraucher |
| 30 | Drucksensor |
| 31 | Durchflussbegrenzer |
| 32 | Überströmventil |
| 33 | Durchflusssensor |
| 34 | Durchflusssensor |

| 35 | Durchflusssensor |
|----|------------------|
| 36 | Durchflusssensor |
| 37 | Verbrauch |
| 38 | Offsetvolumen |
| 39 | Drucksensor |
| 40 | Durchflusssensor |
| 42 | Ventil |
| 50 | Dämpfungsglied |
| 51 | Erste Stufe |
| 52 | Zweite Stufe |
| 60 | Membranfilteranlage |
| 70 | Zulaufstrom |
| 80 | Steuer- und Regeleinheit |
| 81 | Steuer- und Regeleinheit |
| 82 | Steuer- und Regeleinheit |
| 83 | Steuer- und Regeleinheit |

**Patentansprüche**

1. Membranfilteranlage (60), insbesondere zur Umkehrosmose, umfassend einen Vorlagetank (1), eine Ringleitung (28) zum Anschluss von Verbrauchern (29), und wenigstens eine Stufe (51, 52), welche umfasst

   • ein Membranmodul (4, 17), verbunden mit einer Konzentratleitung (8, 21) zur Abgabe eines Konzentratvolumenstroms und einer Permeatleitung (13, 27) zur Abgabe eines Permeatvolumenstroms;
   • eine Zulaufleitung (3, 16) zum Membranmodul (4, 17);
   • wenigstens eine Druckerhöhungspumpe (2, 15) zum Pumpen von Flüssigkeit in das Membranmodul (4, 17);
   • wenigstens eine Zirkulationspumpe (11, 24) zur Rückförderung von Konzentrat aus dem Membranmodul (4, 17) in die Zulaufleitung (3, 16),

   **dadurch gekennzeichnet, dass**
   wenigstens zwei Sensoren (7, 14, 20, 26, 30, 33, 34, 35, 36, 39, 40) zur jeweiligen Messung einer Prozessgröße vorgesehen sind, und wobei wenigstens eine Steuer- und Regeleinheit (81, 82, 83, 84) vorgesehen ist, und wobei der jeweilige Sensor (7, 14, 20, 26, 30, 33, 34, 35, 36, 39, 40) signaleingangsseitig mit der wenigstens einen Steuer- und Regeleinheit (81, 82, 83, 84) verbunden ist, und wobei die wenigstens eine Steuer- und Regeleinheit (81, 82, 83, 84) konfiguriert ist, die Pumpen (2, 11, 15, 24) aufgrund der Sensorsignale der wenigstens zwei Sensoren (7, 14, 20, 26, 30, 33, 34, 35, 36, 39, 40) zu regeln.

2. Membranfilteranlage (60) nach Anspruch 1, wobei die Steuer- und Regeleinheit (81, 82, 83, 84) derart konfiguriert ist, dass sie durch die Regelung der Druckerhöhungspumpe (2, 15) und der Zirkulationspumpe (11, 24) einen Permeatvolumenstrom und einen Konzentratvolumenstrom an die aktuelle Verbraucherentnahme anpasst.

3. Membranfilteranlage (60) nach Anspruch 1 oder 2, wobei wenigstens ein Drucksensor (14, 30, 39) vorgesehen ist, und wobei die wenigstens eine Steuer- und Regeleinheit (80, 82) konfiguriert ist, bei einer Unterschreitung eines Drucksollwertes durch den gemessenen Druck durch den Drucksensor (14, 30, 39) die Drehzahl der Druckerhöhungspumpe (2, 15) derart zu erhöhen, dass der Drucksollwert durch den Druckistwert erreicht wird, und bei einer Überschreitung des Drucksollwertes durch den gemessenen Druck die Drehzahl der Druckerhöhungspumpe (2, 15) derart zu verringern, dass der Drucksollwert durch den Druckistwert erreicht wird.

4. Membranfilteranlage (60) nach Anspruch 3, wobei der Drucksensor (30) an einem Ende der Ringleitung (28) angeordnet ist.

5. Membranfilteranlage (60) nach Anspruch 4, umfassend einen an einem Anfang der Ringleitung (28) angeordneten Durchflusssensor (26) zur Messung des das Membranmodul (4, 17) permeatseitig verlassenden Flüssigkeitsstroms und einen Durchflusssensor (7, 20) zur Messung des das Membranmodul konzentratseitig verlassenden Flüssigkeitsstrom, wobei die Steuer- und Regeleinheit (81, 83) derart konfiguriert ist, die Drehzahl der Zirkulationspumpe (11, 24) in Abhängigkeit von dem durch die Durchflusssensoren (7, 20, 26) gemessenen Durchfluss und der Ausbildung des Membranmoduls (4, 17) und des Überströmungsfaktors anzusteuern, derart, dass ein gewünschter Durchflusssollwert realisiert wird.

6. Membranfilteranlage (60) nach einem der vorherigen Ansprüche, umfassend ein, insbesondere in der Ringleitung (28) angeordnetes, Dämpfungsglied (50).

7. Membranfilteranlage (60) nach Anspruch 6, wobei das Dämpfungsglied (50) ein Überströmventil (32) umfasst, welches sich öffnet, sobald der am Überströmventil (32) anliegende Druck größer als der eingestellte Haltedruck ist.

8. Membranfilteranlage (60) nach Anspruch 6, wobei das Dämpfungsglied (50) ein Überströmventil (32) und einen Durchflussbegrenzer (31) umfasst.

9. Membranfilteranlage (60) nach einem der Ansprüche 6 bis 8, wobei das Dämpfungsglied (50) ein Membranausdehnungsgefäß oder ein Magnetventil in Verbindung mit einem Druckschalter oder Drucksensor.

10. Membranfilteranlage (60) nach einem der vorherigen Ansprüche, wobei das Membranmodul (4, 17) eine Anzahl von in Reihe oder parallel geschaltete Untermembranmodulen umfasst, wobei das jeweilige Untermembranmodul eine Anzahl von Membranen umfasst.

11. Membranfilteranlage (60) nach Anspruch 1, wobei in der Ringleitung (28) ein Überströmventil (32) und wenigstens ein Durchflusssensor (40) angeordnet sind, welcher signaleingangsseitig mit der Steuer- und Regeleinheit (80) verbunden ist, welche die Druckerhöhungspumpe (2) nach einem Durchflusssollwert regelt.

12. Membranfilteranlage (60) nach einem der vorherigen Ansprüche, umfassend genau eine Stufe (51).

13. Membranfilteranlage (60) nach einem der Ansprüche 1 bis 11, die mehrstufig ausgebildet ist, wobei sich jede weitere Stufe (52) an die jeweils vorherige Stufe (51) stromabwärts hydraulisch anschließt.

14. Membranfilteranlage (60) nach Anspruch 13, umfassend zwei Stufen (51, 52), die erste Stufe (51) umfassend ein erstes Membranfiltermodul (4), eine erste Druckerhöhungspumpe (2) und eine erste Zirkulationspumpe (11), die zweite Stufe (52), welche stromabwärts des ersten Membranmoduls (4) angeordnet ist, umfassend ein zweites Membranmodul (17), eine zweite Druckerhöhungspumpe (15) stromabwärts des ersten Membranmoduls (4) und eine zweite Zirkulationspumpe (24), wobei ein erster Drucksensor (14) saugseitig der zweiten Druckerhöhungspumpe (15) angeordnet ist, und wobei die wenigstens eine Steuer- und Regeleinheit (80) konfiguriert ist, eine Drucksollwertregelung der ersten Druckerhöhungspumpe (2) aufgrund des von dem ersten Drucksensor (14) gemessenen Druckwertes durchzuführen, und wobei ein zweiter Drucksensor (30) stromabwärts des zweiten Membranmoduls (17) angeordnet ist, und wobei die wenigstens eine Steuer- und Regeleinheit (82) konfiguriert ist, eine Drucksollwertregelung der zweiten Druckerhöhungspumpe (15) aufgrund des von dem zweiten Drucksensor (30) gemessenen Druckwertes durchzuführen

15. Membranfilteranlage (60) nach Anspruch 13, umfassend zwei Stufen (51, 52), die erste Stufe (51) umfassend ein erstes Membranfiltermodul (4), eine erste Druckerhöhungspumpe (2) und eine erste Zirkulationspumpe (11), die zweite Stufe (52), welche stromabwärts des ersten Membranmoduls (4) angeordnet ist, umfassend ein zweites Membranmodul (17), eine zweite Druckerhöhungspumpe (15) stromabwärts des ersten Membranmoduls (4) und eine zweite Zirkulationspumpe (24), wobei ein erster Drucksensor (30) an Ende in der Ringleitung (28) stromaufwärts des Vorlagetanks (1) angeordnet ist, und wobei die wenigstens eine Steuer- und Regeleinheit (80) konfiguriert ist, eine Drucksollwertregelung der ersten Druckerhöhungspumpe (2) aufgrund des von dem ersten Drucksensor (30) gemessenen Druckwertes durchzuführen, und wobei ein zweiter Drucksensor (14) permeatseitig stromabwärts des ersten Membranmoduls (4) angeordnet ist, und wobei die wenigstens eine Steuer- und Regeleinheit (82) konfiguriert ist, eine Drucksollwertregelung der zweiten Druckerhöhungspumpe (15) aufgrund des von dem zweiten Drucksensor (14) gemessenen Druckwertes durchzuführen.

16. Verfahren zur Membranfilterung einer Flüssigkeit, wobei Flüssigkeit mittels wenigstens einer Druckerhöhungspumpe (2, 15) durch eine Zulaufleitung (3, 16) in ein Membranmodul (4, 17) gefördert wird, und wobei das das Membranmodul (4, 17) verlassende Permeat (5, 18) direkt oder durch wenigstens ein weiteres Membranmodul (17) in eine Ringleitung (28) gespeist wird, an der Verbraucher (29) anschließbar und/oder angeschlossen sind, und wobei mittels wenigstens einer Zirkulationspumpe (11, 24) dass das aus wenigstens einem Membranmodul (4, 17) verlassende Konzentrat zurück in die Zulaufleitung (3, 16) gefördert wird,
**dadurch gekennzeichnet, dass**

durch wenigstens zwei Sensoren (7, 14, 20, 26, 30, 33, 34, 35, 36, 39, 40) jeweils eine Prozessgröße gemessen wird, und wobei wenigstens eine Druckerhöhungspumpe (2, 15) und wenigstens eine Zirkulationspumpe (11, 24) aufgrund der gemessenen Prozessgrößen derart geregelt werden, dass der Permeatvolumenstrom und der Konzentratvolumenstrom an die aktuelle Verbraucherentnahme anpasst werden.

17. Verfahren nach Anspruch 16, wobei die Prozessgröße der Druck und/oder der Flüssigkeitsdurchfluss an einer Stelle der Ringleitung (28) ist.

# FIG. 1

FIG. 2

FIG. 3

# FIG. 4

FIG. 5

**EUROPÄISCHER RECHERCHENBERICHT**

Europäisches Patentamt
European Patent Office
Office européen des brevets

Nummer der Anmeldung

EP 24 15 9211

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2021/362093 A1 (VÖLKER MANFRED [DE] ET AL) 25. November 2021 (2021-11-25) <br> * Anspruch 11; Abbildung 1 * <br> ----- | 1-4, 6-11, 13-17 | INV. B01D61/12 |
| X | US 2021/363030 A1 (WICTOR PER-OLA [SE] ET AL) 25. November 2021 (2021-11-25) <br> * Absatz [0062] * <br> * Absatz [0099]; Abbildung 8 * <br> ----- | 1-4,6, 11,12, 16,17 | |
| X | US 2022/241728 A1 (SENDELIUS PETER [SE] ET AL) 4. August 2022 (2022-08-04) <br> * Absatz [0003] * <br> * Absatz [0046] - Absatz [0047]; Abbildung 3 * <br> ----- | 1-6,11, 12,16,17 | |

RECHERCHIERTE SACHGEBIETE (IPC)

B01D

Der vorliegende Recherchenbericht wurde für alle Patentansprüche erstellt

| Recherchenort | Abschlußdatum der Recherche | Prüfer |
|---|---|---|
| München | 20. Juni 2024 | Hoyer, Michael |

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 24 15 9211

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

20-06-2024

| Im Recherchenbericht angeführtes Patentdokument | Datum der Veröffentlichung | Mitglied(er) der Patentfamilie | Datum der Veröffentlichung |
|---|---|---|---|
| US 2021362093 A1 | 25-11-2021 | DE 202020102937 U1 | 01-07-2020 |
| | | EP 3912706 A1 | 24-11-2021 |
| | | ES 2946443 T3 | 18-07-2023 |
| | | US 2021362093 A1 | 25-11-2021 |
| US 2021363030 A1 | 25-11-2021 | BR 112020023301 A2 | 02-02-2021 |
| | | CN 112135799 A | 25-12-2020 |
| | | EP 3793953 A1 | 24-03-2021 |
| | | US 2021363030 A1 | 25-11-2021 |
| | | WO 2019219502 A1 | 21-11-2019 |
| US 2022241728 A1 | 04-08-2022 | CN 113993820 A | 28-01-2022 |
| | | EP 3986599 A1 | 27-04-2022 |
| | | JP 2022537486 A | 26-08-2022 |
| | | US 2022241728 A1 | 04-08-2022 |
| | | WO 2020254268 A1 | 24-12-2020 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6797173 B1